# EUROPÄISCHE PATENTSCHRIFT

(11) **EP 1 884 438 B1**
(45) Veröffentlichungstag und Bekanntmachung des Hinweises auf die Patenterteilung: **16.12.2009**
(21) Anmeldenummer: 07104547.0
(22) Anmeldetag: 21.03.2007
(51) Int. Cl.: B62B 3/00, B65D 19/10

(54) **Rollbehälter für Stückgut**
Wheeled container for piece goods
Chariot pour pièces de petite taille

(30) Priorität: 25.07.2006 DE 102006034888
(43) Veröffentlichungstag der Anmeldung: 06.02.2008
(73) Patentinhaber: LKE Gesellschaft für Logistik- und Kommunikations- Equipment MbH, 45768 Marl (DE)
(72) Erfinder: Feser, Robert, 45966 Gladbeck (DE)
(74) Vertreter: Cohausz & Florack

(56) Entgegenhaltungen:
- WO-A-97/31832
- WO-A-2006/050390
- DE-A1- 2 903 368
- DE-U1- 8 515 887
- GB-A- 2 377 695
- JP-A- 11 078 898

## Beschreibung

Die Erfindung betrifft einen Rollbehälter für Stückgut mit einem Fahrgestell und einem Aufbau, wobei das Fahrgestell einen rollenbestückten Boden mit mindestens zwei Lenkrollen und der Aufbau zwei an dem Boden verankerte Stirnwände und zwei an den Stirnwänden gehaltene Seitenwände aufweist.

Rollbehälter dieser und ähnlicher Art sind bekannt.

Bei einem aus der Patentliteratur (DE 103 34 214 B3) bekannten Rollbehälter, der für stapelbare Stückgüter, insbesondere Kästen bestimmt ist, fehlen Seitenwände. Um gleichwohl das Stückgut zu sichern, sind an den Rändern der Stirnwände verschwenkbar gelagerte Laschen vorgesehen, die vor das Stückgut, insbesondere die Kästen, schwenkbar sind und so und ggf. zusätzlich mit Bändern das Stückgut gegen Verschieben sichern. Der Vorteil solcher Rollbehälter besteht darin, dass nach Rückschwenken der Laschen und ggf. Lösen der Bänder das Stückgut auf der gesamten Höhe des Rollbehälters frei zugänglich ist. Das Beladen und Entladen ist deshalb problemlos möglich. Nachteilig ist allerdings, dass ein solcher Rollbehälter nicht für den Transport von nicht stapelbarem Stückgut geeignet ist, weil anderes Stückgut sich nicht mit den Laschen gegen Verschieben sichern lässt.

Bei einem aus der Praxis bekannten Rollbehälter der eingangs genannten Art wird beliebiges Stückgut während des Transportes durch die Seitenwände gesichert. Eine optimale Sicherung für das Stückgut ist dann gegeben, wenn die Seitenwand sich über die gesamte Höhe des Aufbaus erstreckt. Derart hohe Seitenwände behindern allerdings in erheblichem Maße das Beladen und Entladen des Rollbehälters. Eine demontierbare Seitenwand würde zwar das Laden und Entladen erleichtern, doch bestünde die Gefahr, dass sich das Stückgut nach Demontieren der Seitenwand versetzt und die Seitenwand sich anschließend wegen im Wege liegendem Stückgut nicht ohne Weiteres wieder verschließen lässt.

Bei einem aus der Patentliteratur bekannten, aus der Praxis bekannten Rollbehälter sehr ähnlichen Rollbehälter (DE 27 07 294 A1, DE 23 30 017 A1) ist eine Seitenwand in eine obere und untere Hälfte aufgeteilt, wobei die obere Hälfte an der unteren Hälfte herunterklappbar gelagert ist. Auch bei diesem Rollbehälter besteht die Gefahr, dass nach Herunterklappen der oberen Seitenwandhälfte und Entnahme von Stückgut das im Rollbehälter verbleibende Stückgut oberhalb des Niveaus der Schwenkachse sich versetzt und das Wiederverschließen der oberen Seitenwandhälfte behindert.

GB 2 377 695, JP 11 078 898 und DE 8 515 887 U offenbaren gattungsgemäße Rollbehälter.

Der Erfindung liegt die Aufgabe zugrunde, einen Rollbehälter für Stückgut zu schaffen, der beliebiges Stückgut während des Transportes sichert und der sich leicht von Personen beladen und entladen lässt.

Diese Aufgabe wird erfindungsgemäß mit einem Rollbehälter gemäß dem Anspruch 1 gelöst.

Bei dem erfindungsgemäßen Rollbehälter ist das Beladen und Entladen nach Herunterklappen der Ladeklappe über die geöffnete Ladeöffnung leicht. Die Bedienungsperson braucht nicht länger über eine hohe Ladekante tief in den Rollbehälter hineinzugreifen, sondern kann in ergonomisch günstiger Körperhaltung das Stückgut von vorne über die niedrige Rampe der Ladeöffnung in den Rollbehälter laden und auch umgekehrt entladen. Da die Seitenwand bis auf die Öffnung geschlossen bleibt, bleibt auch nicht stapelbares Stückgut im Rollbehälter an Ort und Stelle und stört deshalb nicht das Schließen der Ladeklappe. Ein für das Schließen der Ladeklappe nötiges Umräumen von sich setzendem Ladegut ist in der Regel nicht nötig. Das Öffnen und Schließen der Ladeöffnung mit der Ladeklappe ist deshalb problemlos mit wenigen Handgriffen möglich.

Um das Beladen und Entladen weiter zu erleichtern, kann die Ladeöffnung sich von unten nach oben erweitern. Eine günstige Form für die Ladeöffnung ist ein Trapez.

Vorzugsweise geht die Ladeklappe in ihrer hochgeklappten, geschlossenen Lage bündig in die angrenzende Seitenwand über.

Gemäß der Erfindung weist die Ladeklappe an ihrem oberen Rand Verriegelungselemente auf, mit denen sie an der benachbarten Seitenwand arretierbar ist. Die Verriegelungselemente sind vorzugsweise in Verriegelungsrichtung verschiebbare, federbeaufschlagte Dorne, denen Steckaufnahmen in der Seitenwand zugeordnet sind. Insbesondere dann, wenn die Ladeklappe einen Rohrrahmen aufweist, können die Dorne in einem Teil des Rohrrahmens der Ladeklappe geführt sein und äußere Betätigungsgriffe aufweisen. Um das Verschließen und das Verriegeln zu erleichtern, sollten zwischen der Ladeklappe und der Seitenwand wirksame Anschläge vorgesehen sein,
die die Schwenkbewegung der Ladeklappe in Schließrichtung begrenzen. Diese Anschläge sind vor allem dann von praktischem Nutzen, wenn die Verriegelungselemente aus Dorn und Steckaufnahme bestehen, weil dann ein Suchen der Steckaufnahme durch die Dorne sich erübrigt.

Nach einer weiteren Ausgestaltung der Erfindung ist die Seitenwand mit unteren Steckverbindungen an dem Boden des Fahrgestells verankerbar, während sie mit seitlichen Verriegelungselementen an den Holmen der Stirnwände lösbar befestigt ist. Dieses Befestigungsprinzip ist auch schon im Stand der Technik bei den Seitenwänden ohne Ladeklappe realisiert. Deshalb kann der erfindungsgemäße Rollbehälter entweder mit den erfindungsgemäßen Seitenwänden oder mit herkömmlichen höheren Seitenwänden bestückt werden. Alternativ kann oberhalb der Seitenwand mit der Ladeklappe ein Ladewandteil leicht lösbar an den Stirnwänden befestigt sein. Dadurch kann die Ladehöhe des Rollbehälters vergrößert werden. Die Zugänglichkeit der dagegen niedrigen Ladeklappe bleibt dabei erhalten.

Im Falle der demontierbaren Seitenwände können die Verriegelungselemente der Seitenwand als Steckverbindungen aus Steckaufnahmen in den Holmen und verschiebbare, federbeaufschlagte Dorne an der Seitenwand ausgebildet sein.

Im Folgenden wird die Erfindung anhand einer ein Ausführungsbeispiel darstellenden Zeichnung näher erläutert. Im Einzelnen zeigen:
- Fig. 1: einen Rollbehälter mit einer eingebauten Seitenwand mit geschlossener Ladeklappe in perspektivischer Darstellung,
- Fig. 2: den Rollbehälter gemäß Fig. 1 mit einer eingebauten Seitenwand mit offener Ladeklappe in perspektivischer Darstellung,
- Fig. 3: den Rollbehälter gemäß Fig. 1 in Vorderansicht,
- Fig. 4: den Rollbehälter gemäß Fig. 1 in Seitenansicht,
- Fig. 5: den Rollbehälter gemäß Fig. 1 in Aufsicht,

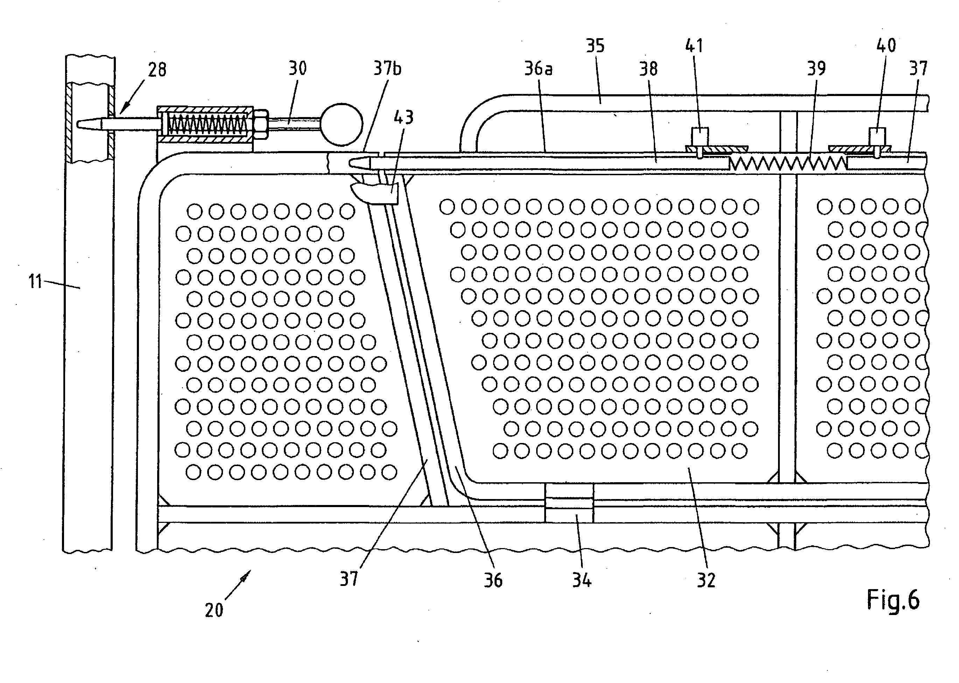

- Fig. 6: den Rollbehälter gemäß Fig. 1 im vergrößerten Ausschnitt A der Fig. 4 und

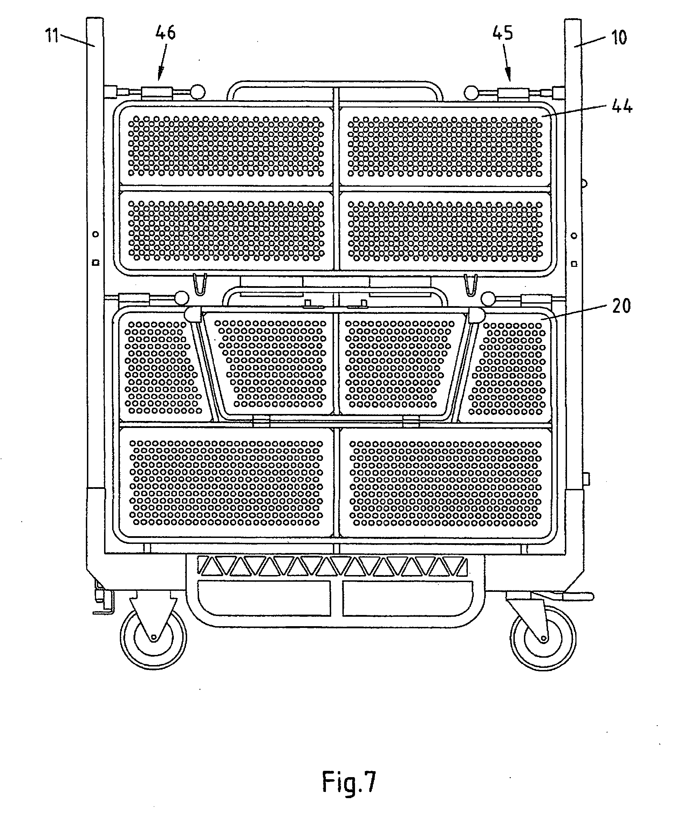

- Fig. 7: den Rollbehälter gemäß Fig. 1 mit einem zusätzlichen Seitenwandteil in Seitenansicht.

Der dargestellte Rollbehälter weist ein Fahrgestell 1 und einen Aufbau 2 auf. Das Fahrgestell 1 weist einen Boden 3, zwei Lenkrollen 4, 5 und zwei Bockrollen 6, 7 auf. An dem Fahrgestell 1 ist an der Seite der Lenkrollen 4, 5 eine hochschwenkbare Deichsel 8 angeordnet, während an der anderen Seite des Fahrgestells 1 ein Kupplungselement 9 befestigt ist, an dem die Deichsel eines entsprechenden anderen Rollbehälters angekuppelt werden kann, um mehrere Rollbehälter zu einem Zug zusammenzustellen.

Der Aufbau des Rollbehälters besteht aus zwei Stirnwänden 10, 11, die starr und dauerhaft mittels Winkelbeschlägen 12, 13, 14, 15 am Boden 3 des Fahrgestells 1 gehalten sind. Die Stirnwände 10, 11 sind durch Streben 16, 17 ausgefüllt, so dass Stückgut gehalten wird.

An der lenkrollenseitigen Stirnwand 10 ist ein hochklappbarer, bügelförmiger Zuggriff 18 angelenkt, mit dem eine Bedienungsperson den Rollbehälter manövrieren kann. Der Zuggriff 18 ist mit Bremsgriff 19 versehen, der über Seilzüge mit Bremsen an den Rollen 4, 5 und/oder 6, 7 gekuppelt ist.

Die Seiten des Rollbehälters zwischen den Stirnwänden 10, 11 sind durch halb hohe Seitenwände 20 verschlossen. In der Zeichnung ist aus Gründen einer vereinfachten Darstellung nur eine Seitenwand 20 eingesetzt. Die Seitenwand 20 ist lösbar auf dem Boden 3 des Fahrgestells 1 und an Holmen der Stirnwände 10, 11 befestigt. Dafür sind im Boden Steckaufnahmen 21, 22, 23 vorgesehen, in die die Seitenwand 20 mit unterseitigen Dornen 24, 25, 26 einsteckbar ist. Des weiteren wird die Seitenwand 20 durch Verriegelungselemente gehalten, die aus Steckaufnahmen 27, 28 in den Holmen der Stirnwände 10, 11 und federbeaufschlagten Dornen 29, 30 bestehen.

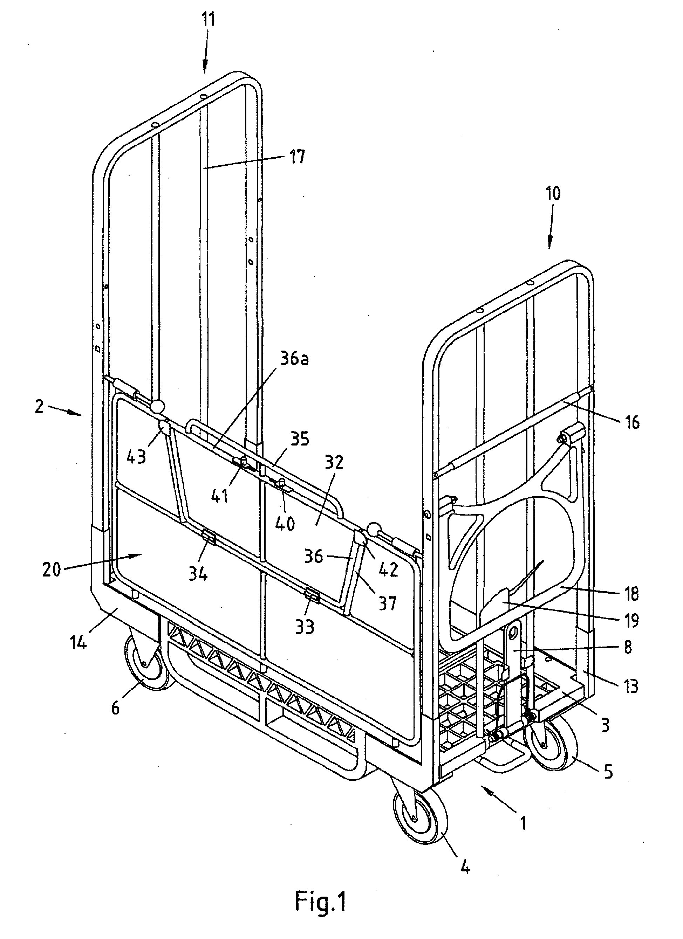

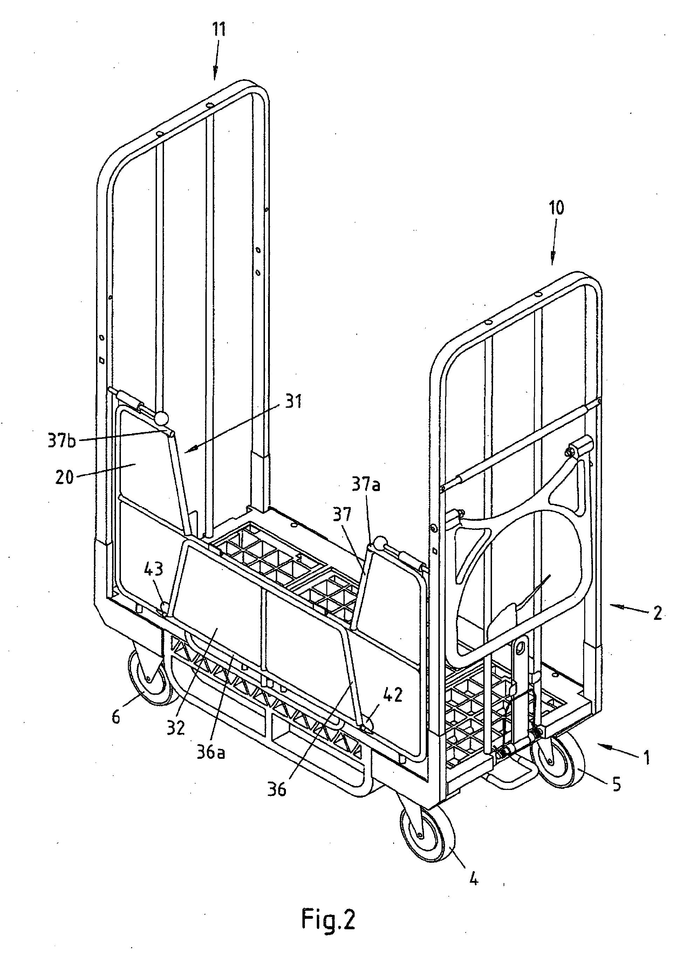

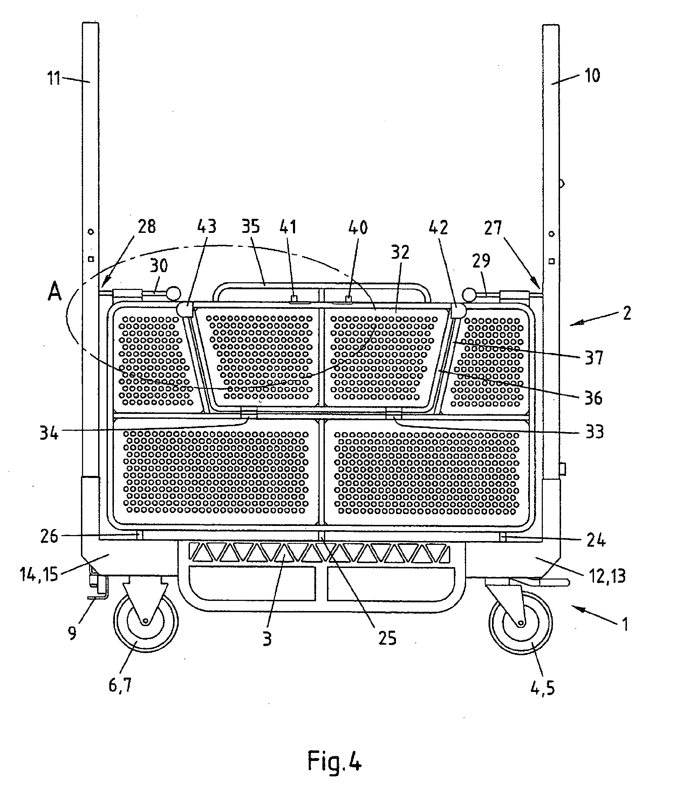

Im oberen Bereich mindestens einer 20 der Seitenwände, ist eine verschließbare Ladeöffnung 31 vorgesehen. Diese Ladeöffnung 31 hat eine sich nach oben erweiterte Trapezform. In die Ladeöffnung 31 eingepasst ist eine Ladeklappe 32. Diese Ladeklappe 32 ist über Scharniergelenke 33, 34 aus ihrer Schließstellung in Fig. 1 und 4 in die geöffnete Stellung in Fig. 2 herunterklappbar. Am oberen Rand weist sie einen Bügelgriff 35 auf. Sowohl die Ladeklappe 32 als auch die übrige Seitenwand 20 weist einen Rohrrahmen 36, 37 auf. In dem oberen Teil 36a des Rohrrahmens 36 der Ladeklappe 32 sind zwei federbelastete Dorne 37,38 geführt. Diese Dorne 37, 38 greifen in die als Steckaufnahmen 37a, 37b dienenden seitlich offenen Rohrabschnitte des Rohrrahmens 37 der Seitenwand 20 ein und halten auf diese Art und Weise die Ladeklappe 32 verschlossen. Gegen die Kraft einer Feder 39 können die Dorne 37, 38 aus ihrer Verriegelungsstellung zurückgezogen werden. Dafür sind an den Dornen Bedienknöpfe 40, 41 vorgesehen. Damit die Ladeklappe 32 beim Hochklappen problemlos ihre exakt vorbestimmte Lage in der Ebene der Seitenwand 20 annimmt, sind zwischen der Seitenwand 20 und der Ladeklappe 32 wirksame Anschläge 42, 43 in Form von Laschen vorgesehen.

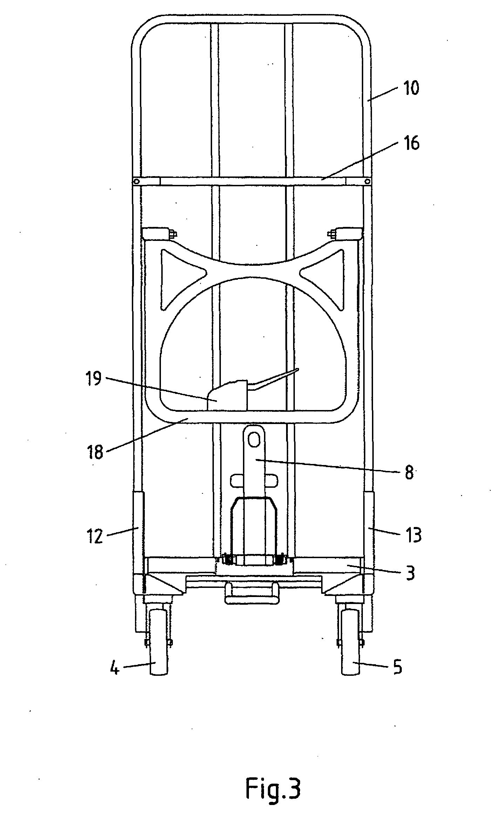

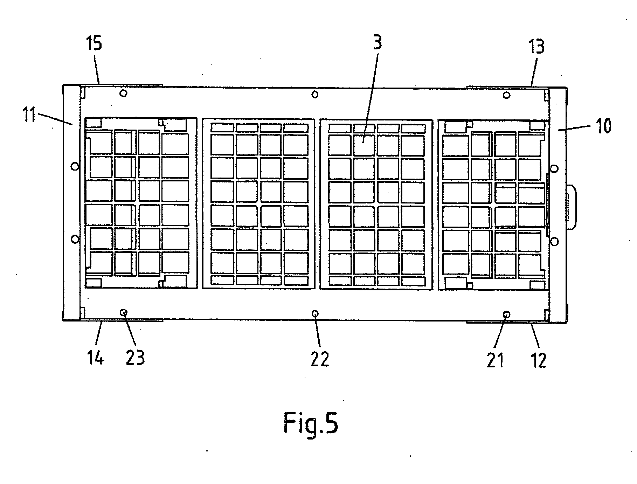

Oberhalb der halbhohen Seitenwand 20 des Ausführungsbeispiels der Fig. 1 bis 5 kann für den Transport besonders hochbauender Stückgüter ein zusätzliches Wandteil 44 mittels Steckverbindungen 45, 46 leicht lösbar an den Stirnwänden 10, 11 befestigt sein, wie Fig .7 zeigt.

## Patentansprüche

1. Rollbehälter für Stückgut mit einem Fahrgestell (1) und einem Aufbau (2), wobei das Fahrgestell (1) einen rollenbestückten Boden (3) mit mindestens zwei Lenkrollen (4, 5) und der Aufbau (2) zwei an dem Boden (3) verankerte Stirnwände (10, 11) und zwei an den Stirnwänden (10, 11) gehaltene Seitenwände (20) aufweist, wobei zumindest eine Seitenwand (20) eine von der Oberkante der Seitenwand (20) ausgehende, mittige Ladeöffnung (31) aufweist, die durch eine an ihrem unteren Rand angelenkte einen Rohrrahmen (36) aufweisende Ladeklappe (32) verschließbar ist, wobei die Ladeklappe (32) an ihrem oberen Rand Verriegelungselemente (37 bis 41) aufweist, mit denen sie an der benachbarten Seitenwand (20) arretierbar ist, wobei die Verriegelungselemente in Verriegelungsrichtung verschiebbare, federbeaufschlagte Dorne (37, 38) sind, denen Steckaufnahmen (37a, 37b) an der Seitenwand (20) zugeordnet sind, **dadurch gekennzeichnet, dass** die Dorne (37, 38) in einem Teil (36a) des Rohrrahmens (36) der Ladeklappe (32) geführt sind und äußere Betätigungsgriffe (40, 41) aufweisen.

2. Rollbehälter nach Anspruch 1,
**dadurch gekennzeichnet, dass** die Ladeöffnung (31) sich von unten nach oben erweitert.

3. Rollbehälter nach Anspruch 1 oder 2,
**dadurch gekennzeichnet, dass** die Ladeklappe (32) in ihrer hochgeklappten, geschlossenen Lage bündig in die angrenzende Seitenwand (20) übergeht.

4. Rollbehälter nach einem der Ansprüche 1 bis 3,
**dadurch gekennzeichnet, dass** zwischen der Ladeklappe (32) und der Seitenwand (20) wirksame Anschläge (42, 43) vorgesehen sind, die die Schwenkbewegung der Ladeklappe(32) in Schließrichtung begrenzen.

5. Rollbehälter nach einem der Ansprüche 1 bis 4,
**dadurch gekennzeichnet, dass** die Seitenwand (20) mit unteren Steckverbindungen (21 bis 26) an dem Boden (3) des Fahrgestells (1) verankerbar und mit seitlichen Verriegelungselementen (27 bis 30) an Holmen der Stirnwände (10, 11) lösbar befestigt ist.

6. Rollbehälter nach Anspruch 5,
**dadurch gekennzeichnet, dass** die Verriegelungselemente (27 bis 30) der Seitenwand (20) als Steckverbindungen aus Steckaufnahmen (27, 28) in den Holmen und verschiebbare, federbeaufschlagte Dorne (29,30) an der Seitenwand (20) ausgebildet sind.

7. Rollbehälter nach einem der Ansprüche 1 bis 6,
**dadurch gekennzeichnet, dass** oberhalb der Seitenwände (20) jeweils ein Wandteil (44) an den Stirnwänden (10, 11) leicht lösbar befestigt ist.

## Claims

1. A rolling container for unit load comprising an undercarriage (1) and a superstructure (2), the undercarriage (1) comprising a bottom (3) provided with rollers including at least two steering rollers (4, 5) and the superstructure (2) comprising two end walls (10, 11) mounted to the bottom (3) and two sidewalls (20) supported by the end walls (10, 11), wherein at least one sidewall (20) comprises a central loading opening (31) extending from the top edge of the sidewall (20), which opening can be closed by a loading flap (32) hinged at its bottom edge and comprising a tubular frame (36), said loading flap (32) comprising locking elements (37 to 41) on its top edge for locking it to an adjacent sidewall (20), said locking elements being spring-loaded pins (37, 38) slidable in a locking direction and associated with sockets (37a, 37b) on the sidewall (20), **characterized in that** said pins (37, 38) are guided in a portion (36a) of the tubular frame (36) of the loading flap (32) and comprise external operating handles (40, 41).

2. The rolling container according to claim 1,
**characterized in that** the loading opening (31) widens from the bottom to the top.

3. The rolling container according to claim 1 or 2,
**characterized in that** the loading flap (32) in its upwardly pivoted, closed position is flush with the adjacent sidewall (20).

4. The rolling container according to one of claims 1 to 3,
**characterized in that** stops (42, 43) effective between the loading flap (32) and the sidewall (20) are provided limiting the pivoting motion of the loading flap (32) in the closing direction.

5. The rolling container according to one of claims 1 to 4,
**characterized in that** the sidewall (20) can be anchored to the bottom (3) of the undercarriage (1) by means of lower plug-in connections (21 to 26) and can be detachably fixed to the spars of the end walls (10, 11) by means of side locking elements (27 to 30).

6. The rolling container according to claim 5,
**characterized in that** the locking elements (27 to 30) of the sidewall (20) are in the form of plug-in connections comprising sockets (27, 28) in the spars as well as spring-loaded slidable pins (29, 30) on the sidewall (20).

7. The rolling container according to one of claims 1 to 6,
**characterized in that** above each of the sidewalls (20) a wall part (44) is attached to the end walls (10, 11) in an easily detachable manner.

## Revendications

1. Chariot pour des pièces de petite taille, avec un châssis (1) et une structure (2), le châssis (1) présentant un fond (3) équipé de roulettes, dont au moins deux roulettes directionnelles (4, 5), et la structure (2) présentant des parois frontales (10, 11) fixées au fond (3), et deux parois latérales (20) fixées aux parois frontales (10, 11), au moins une paroi latérale (20) présentant une ouverture de chargement (31), disposée centralement, qui, partant du bord supérieur de la paroi latérale (20), peut être fermée par un volet de chargement (32), monté, articulé sur le bord inférieur de ladite ouverture et présentant un cadre en tubes (36), le volet de chargement (32) présentant, sur son bord supérieur, des éléments de verrouillage (37 à 41), au moyen desquels il peut être bloqué sur la paroi latérale (20) voisine, les éléments de verrouillage étant des broches (37, 38) commandées par ressort, qui peuvent être déplacées dans la direction de verrouillage et auxquelles sont associées des logements d'enfichage (37a, 37b), pratiqués dans la paroi latérale (20), **caractérisé en ce que** les broches (37, 38) sont guidées dans une partie (36a) du cadre en tubes (36) du volet de chargement (32) et présentent des boutons de commande extérieurs (40, 41).

2. Chariot selon la revendication 1, **caractérisé en ce que** l'ouverture de chargement (31) s'élargit du bas vers le haut.

3. Chariot selon revendication 1 ou 2, **caractérisé en ce que** le volet de chargement (32), dans sa position fermée, relevée, se raccorde à surface plane à la paroi latérale (20) adjacente.

4. Chariot selon l'une des revendications 1 à 3, **caractérisé en ce que** sont prévus, entre le volet de chargement (32) et la paroi latérale (20), des butées (42, 43) effectives, qui limitent le mouvement de pivotement du volet de chargement (32), dans la direction de fermeture.

5. Chariot selon l'une des revendications 1 à 4, **caractérisé en ce que** la paroi latérale (20) peut être fixées au fond (3) du châssis (1) avec des organes enfichables (21 à 26), et qu'elle est fixée de manière amovible à des longerons des parois frontales (10, 11), avec des éléments de verrouillage (27 à 30) latéraux.

6. Chariot selon la revendication 5, **caractérisé en ce que** les éléments de verrouillage (27 à 30) de la paroi latérale (20) sont constitués, en tant qu'organes enfichables, par des logements d'enfichage (27, 28), pratiqués dans les longerons, et des broches (29, 30) commandées par ressort, qui équipent la paroi latérale (20).

7. Chariot selon l'une des revendications 1 à 6, **caractérisé en ce que,** au-dessus des parois latérales (20), un élément de paroi (44) est fixé, de manière facilement amovible, à chacune des parois frontales (10, 11).
